# EUROPEAN PATENT APPLICATION

(11) **EP 4 145 848 A1**
(43) Date of publication of application: **08.03.2023**
(21) Application number: 22193616.4
(22) Date of filing: 02.09.2022
(51) Int. Cl.: H04R 1/02, A45D 42/16, A47G 1/16

(54) **SMART SOUND MIRROR DEVICE INTEGRATED WITH AI ASSISTANT PLATFORM SERVICE AND EQUIPPED WITH DISPLAY**

(30) Priority: 03.09.2021 KR 20210117540; 01.09.2022 KR 20220110811
(71) Applicant: Icon AI Inc., Seocho-gu Seoul 06770 (KR)
(72) Inventor: SHIN, Min Young, 06600 Seoul (KR)
(74) Representative: BCKIP Part mbB

(57) **Abstract**

A smart sound mirror device includes: a speaker unit configured to output a sound; a mirror unit detachably installed to the speaker unit; and a wall mount bracket configured to be fixedly installed on a wall, the wall mount bracket being selectively fixed to the speaker unit or the mirror unit. Further, the speaker unit includes: a speaker body; a speaker built in the speaker body; a speaker bracket mounted on a rear portion of the speaker body to be fixed to the wall mount bracket; and a speaker cover mounted on a front portion of the speaker body and providing a sound slit through which a sound of the speaker is output.

## Description

### TECHNICAL FIELD

The present disclosure relates to a smart sound mirror device integrated with AI assistant platform service and equipped with a display.

### BACKGROUND

In general, a user may apply makeup while looking in a mirror. In addition, the user may use a smart device such as a tablet or a mobile terminal separately by holding it or by using a separate holder.

Recently, smart devices that not only allow a user to check his/her appearance in real time, but also provide various information through a display have been proposed.

However, since a device including a mirror and a smart device which are integrated, or a device including a mirror and a smart device which are detachably combined has not been proposed, users cannot use a smart device simultaneously while looking in a mirror, which may cause inconvenience in terms of user convenience.

### SUMMARY

In view of the above, the present disclosure provides a smart sound mirror device integrated with an AI assistant platform service and equipped with a display, which combines a mirror and a speaker to allows a user to enjoy sound while looking in the mirror simultaneously, and to enjoy sound even in a state in which the mirror and the speaker are separated from each other.

In accodacne with an aspect of the present disclosure, there is provided a smart sound mirror device including: a speaker unit configured to output a sound; a mirror unit detachably installed to the speaker unit; and a wall mount bracket configured to be fixedly installed on a wall, the wall mount bracket being selectively fixed to the speaker unit or the mirror unit.

Further, the speaker unit may include: a speaker body; a speaker built in the speaker body; a speaker bracket mounted on a rear portion of the speaker body so as to be fixed to the wall mount bracket; and a speaker cover mounted on a front portion of the speaker body and providing a sound slit through which a sound of the speaker is output.

Further, the speaker body may include: a rear support frame supporting a rear portion of the speaker; a front support frame mounted to a front end portion of the rear support frame to support a front portion of the speaker; a waterproof member for watertightness with respect to the speaker body; and a waterproof support frame disposed between the front support frame and the waterproof member to support the waterproof member.

The wall mount bracket may include: a mounting fixed piece configured to be fixedly installed on the wall; and a mounting movable piece mounted to the mounting fixed piece to be movable in an up-down direction, the mounting movable piece being selectively fixed to the speaker unit or the mirror unit.

The mounting fixed piece may include: a fixing body portion; a plurality of fixing hole portions extending in a longitudinal direction of the fixing body portion and spaced apart from each other in the longitudinal direction of the fixing body portion; and a fixing holder formed to protrude from a rear surface of the fixing body portion.

The mounting movable piece may include: a moving body portion; a moving hole portion formed in one end portion of the moving body portion and having a larger diameter than a diameter of the fixing holder; a moving slit portion extending from the moving hole portion in a longitudinal direction of the moving body portion; and a moving holder formed to protrude at the other end portion of the moving body portion so as to be mountable to the speaker unit or the mirror unit.

The mirror unit may include: a mirror; and a mirror bracket installed on an edge portion of the mirror to support the mirror and providing a mirror hole for fixing with the wall mount bracket.

The speaker unit may further include: an attachment/detachment unit configured to selectively attach or detach the mirror unit by magnetic force of a magnetic material.

The smart sound mirror device may further include: a portable biometric information measuring sensor unit that determines biometric information of a user based on at least one biometric signal, wherein the portable biometric information measuring sensor unit may be detachably mounted to an upper portion of the speaker unit, and when mounted on the speaker unit, the portable biometric information measuring sensor unit provides an operation result thereof to the mirror unit.

The smart sound mirror device may further include: a display module installed in the speaker unit or the mirror unit, and the display module may output an image by executing a preset display mode according to a voice signal or touch signal of a user.

According to embodiments of the present disclosure, as the mirror and the speaker can be combined, the user can enjoy the sound of the speaker simultaneously while looking in the mirror, and the mirror and the speaker can be separated to be used individually.

Further, according to embodiments of the present disclosure, the speaker can be freely installed on the wall located on the right or left side of the mirror through the bracket.

In addition, according to embodiments of the present disclosure, the speaker can be used alone or by adding a display to the speaker.

In addition, according to embodiments of the present disclosure, an artificial intelligence (AI) assistant platform service is mounted in the speaker to provide a function of an AI speaker, and two or more microphones are mounted on the speaker to perform voice recognition and control the voice.

Further, according to embodiments of the present disclosure, various uses with peripheral devices are possible by applying software that can be used in conjunction with a smart home and Internet of Things (IoT).

Furthermore, according to embodiments of the present disclosure, by providing a lamp at a rear portion of the mirror and in an upper portion of the speaker in contact with the mirror, a mood lighting function can be provided.

Moreover, according to embodiments of the present disclosure, since it can be installed in various residential spaces such as a bathroom, a living room and the like, and commercial spaces such as a restaurant and the like, it is possible to provide a sound mirror function having an interior effect.

### BRIEF DESCRIPTION OF THE DRAWINGS

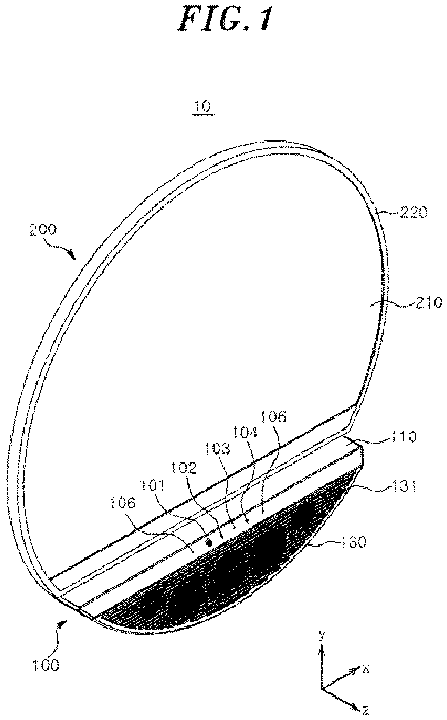

FIG. 1 is a perspective view of a smart sound mirror device according to a first embodiment of the present disclosure as viewed from the front side thereof.

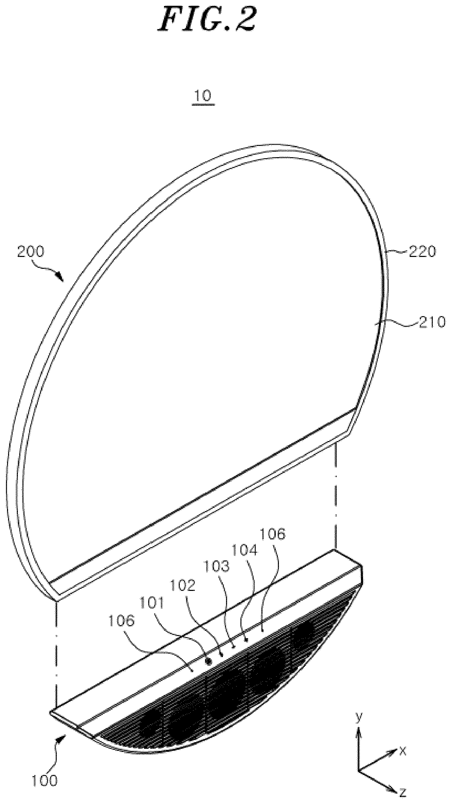

FIG. 2 is a perspective view showing the smart sound mirror device according to the first embodiment of the present disclosure in a state in which a mirror unit and a speaker unit are separated.

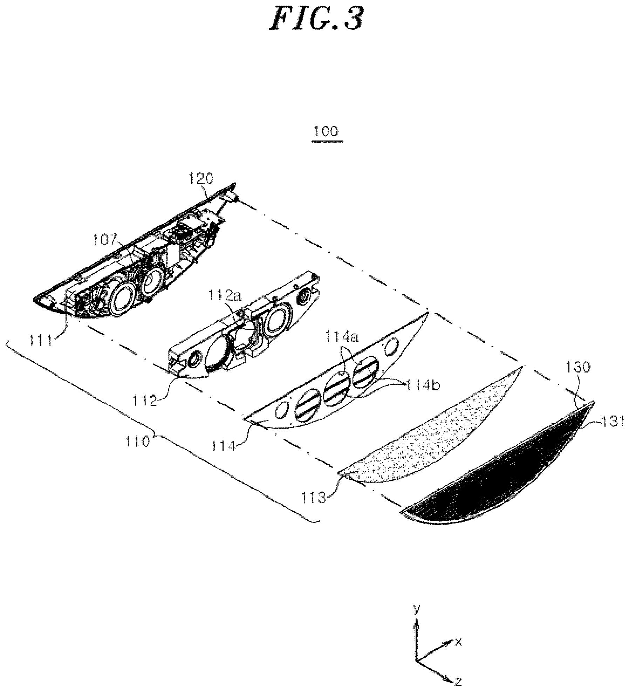

FIG. 3 is an exploded perspective view of the speaker unit of the smart sound mirror device according to the first embodiment of the present disclosure.

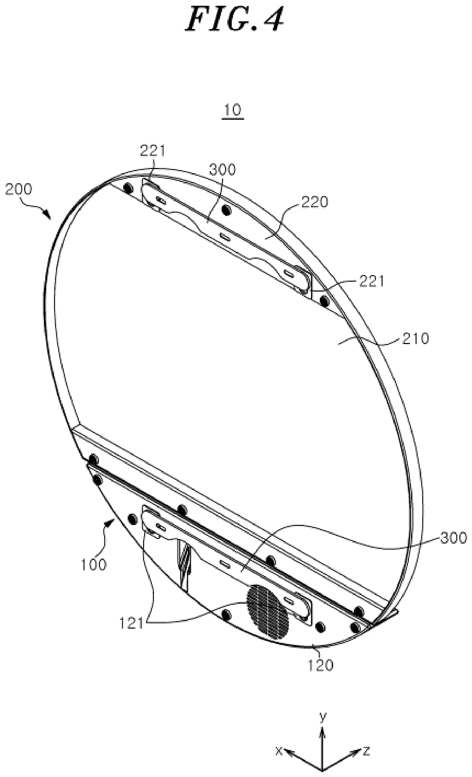

FIG. 4 is a perspective view of the smart sound mirror device according to the first embodiment of the present disclosure as viewed from the rear side thereof.

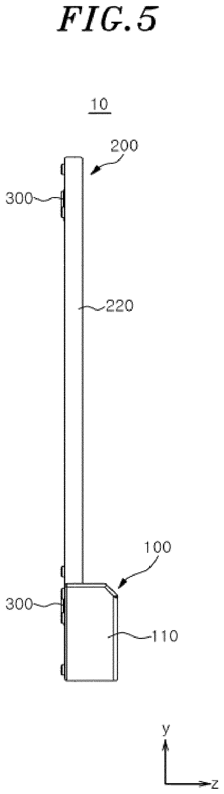

FIG. 5 is a side view of the smart sound mirror device according to the first embodiment of the present disclosure as viewed from the side.
FIG. 6 is a perspective view showing a state in which a portable biometric information measuring sensor unit is attached to and detached from the smart sound mirror device according to a modified example of the first embodiment of the present disclosure.
FIGS. 7 and 8 are state diagrams showing installation states of the smart sound mirror device according to the first embodiment of the present disclosure.
FIG. 9 is a perspective view of a smart sound mirror device according to a second embodiment of the present disclosure as viewed from the front side thereof.
FIG. 10 is a perspective view of a smart sound mirror device according to a modified example of the second embodiment of the present disclosure as viewed from the front side thereof.
FIG. 11 is a perspective view of a smart sound mirror device according to another modified example of the second embodiment of the present disclosure as viewed from the front side thereof.
FIG. 12 is a perspective view of a smart sound mirror device according to a third embodiment of the present disclosure as viewed from the rear side thereof.
FIG. 13 is an enlarged perspective view of a wall mount bracket of the smart sound mirror device according to the third embodiment of the present disclosure.
FIG. 14 is a front view showing the wall mount bracket of the smart sound mirror device according to the third embodiment of the present disclosure.
FIG. 15 is a front view showing a wall mount bracket of a smart sound mirror device according to a modified example of the third embodiment of the present disclosure.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'accessed' to, 'supplied' to, 'transferred' to, or 'contacted' with another element, it should be understood that the element may be directly connected to, supported by, accessed to, supplied to, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side and the lower side, ths side surface are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

Hereinafter, embodiments of the present disclosure will be described in detail based on the accompanying drawings.

Referring 1 to 8, a smart sound mirror device 10 according to a first embodiment of the present disclosure may include a speaker unit 100, a mirror unit 200, and a wall mount bracket 300. The speaker unit 100 and the mirror unit 200 may be used in a state in which they are combined with each other or in a state in which they are separated from each other. Accordingly, the user can enjoy sound while looking in the mirror unit 200 simultaneously by combining the speaker unit 100 and the mirror unit 200, and can also enjoy the sound of the speaker unit 100 in the state in which the speaker unit 100 and the mirror unit 200 are separated.

Specifically, the speaker unit 100 may provide a sound function which outputs sound. In addition, the speaker unit 100 may detect a user's voice signal and may play music in conjunction with Bluetooth. Further, the speaker unit 100 may be configured to operate in conjunction with the Internet, communication, smart home, and IoT. Furthermore, the speaker unit 100 may provide information such as music playback, weather information, and news to a user in conjunction with an AI assistant platform service (including voice assistants).

The speaker unit 100 may include a speaker body 110, a speaker 107, a speaker bracket 120, and a speaker cover 130. The speaker body 110 may provide an overall shape of the speaker unit 100. The speaker body 110 may be selectively and detachably docked to the mirror unit 200. As an example, an upper portion of the speaker body 110 may be detachably attached to a lower portion of the mirror unit 200 through an attachment/detachment unit. The attachment/detachment unit may include a magnetic material capable of detachably attaching the mirror unit 200 to the speaker unit 100 by magnetic force.

The speaker 107 may be provided inside the speaker body 110. The speaker 107 may output sound or a voice signal of a voice assistant. As an example, the speaker 107 may be controlled by the AI assistant platform service (e.g., a voice assistant of a controller). The speaker 107 may communicate with the controller through a Bluetooth communication method.

The speaker body 110 may include a rear support frame 111, a front support frame 112, a waterproof member 113, and a waterproof support frame 114. The rear support frame 111 may support rear portions of electronic components including the speaker 107. A rear portion of the rear support frame 111 may be supported by the speaker bracket 120, and a front portion of the rear support frame 111 may be coupled to the front support frame 112. Here, the terms for directions are defined as follows: a height direction of the speaker body 110 indicates the y-axis direction in the drawings, a width direction of the speaker body 110 indicates the x-axis direction in the drawings, and a front-rear direction of the speaker body 110 indicates the z-axis direction in the drawings.

The front support frame 112 may be mounted to a front end portion of the rear support frame 111. The front support frame 112 may support front portions of the electronic components in the speaker body 110 including the speaker 107. A front support hole 112a in which the front portion of the electronic component (e.g., the speaker) is supported may be formed in the front support frame 112.

The waterproof member 113 may include a material for watertightness with respect to the electronic components in the speaker body 110. As an example, the waterproof member 113 may be made of a desiccant material that blocks or at least absorbs moisture. The waterproof member 113 may be provided in a shape corresponding to the shape of the waterproof support frame 114 and the speaker cover 130.

The waterproof support frame 114 may be disposed between the front support frame 112 and the waterproof member 113 to support the waterproof member 113. In the waterproof support frame 114, a waterproof support hole 114a communicating with the front support hole 112a and a plurality of waterproof support leads 114b formed side by side in the waterproof support hole 114a may be formed.

The speaker bracket 120 may be installed on a rear portion of the speaker body 110. The speaker bracket 120 may be fixed to a wall through a conventional fixing member (e.g., a bolt, a nut, etc.). For coupling with the fixing member, the speaker bracket 120 may provide at least one bracket fixing hole 121. As an example, the speaker bracket 120 may provide two bracket fixing holes 121.

The speaker cover 130 may be mounted on a front portion of the speaker body 110. Speaker slits 131 through which sound of the speaker is output may be formed in the speaker cover 130. The speaker slits 131 may have a long hole shape extending in the width direction of the speaker cover 130.

Meanwhile, a power switch 101, a Bluetooth switch 102, a volume-down switch 103, a volume-up switch 104, and a microphone 106 may be provided on an upper portion of the speaker body 110. The power switch 101 may be provided on a front surface of the speaker body 110 for the operation of the speaker unit 100.

When a user touches the power switch 101, a function of the AI assistant platform may be performed. The Bluetooth switch 102 may turn on or off the Bluetooth function between a user's mobile phone and the speaker. The volume-down switch 103 and the volume-up switch 104 may increase or decrease the volume of the speaker by the user's touch.

The microphone 106 may detect the user's voice signal. The microphone 106 may include a pair of microphones 106 provided on the front portion of the speaker body 110. The power switch 101, the Bluetooth switch 102, the volume-down switch 103 and the volume-up switch 104 may be disposed in a space between the pair of microphones 106. As a matter of course, besides one pair, four or six microphones 106 may be provided in pairs.

A speaker lamp may be installed on the speaker body 110. The speaker lamp may provide mood lighting toward the mirror unit 200. The speaker lamp may create a moody atmosphere through the light reflected by the mirror unit 200. The speaker lamp may be provided in the form of a strip LED. The speaker lamp may provide various colors (e.g., cool, warm, and white-based colors).

The controller may include a board module for controlling the speaker unit 100 as a whole. The controller may be implemented by an arithmetic unit including a processor, a memory, a communication module, and the like.

The controller may receive a user's voice signal from the microphone 106, and receive a user's touch signal through the power switch 101, the Bluetooth switch 102, the volume-down switch 103 and the volume-up switch 104. The controller may provide the AI assistant platform service to execute a preset operation mode according to the user's voice signal or touch signal.

Here, the AI assistant platform service may provide information such as music playback, weather information, and news, and may play music in conjunction with Bluetooth. The AI assistant platform service may perform a voice assistant function. The voice assistant function may be implemented as a voice assistant to which a voice recognition technology for converting a voice signal received through the microphone 106 into words or sentences is applied.

The voice assistant function may process the user's voice signal as an input signal and may provide various services such as music playback, schedule management, alarm service reservation guidance, speaker operation, and the like as well as search as the AI assistant service through a preset algorithm. Since the voice assistant function is a concept corresponding to a conventional voice assistant function, detailed descriptions thereof will be omitted.

In addition, the AI assistant platform service may control operations of peripheral electronic products in conjunction with smart home and Internet of Things (IoT). For example, when the user applies a voice signal to operate an electronic product (smart TV, smart air conditioner, smart light, smart security system, etc.) to the present disclosure, the voice assistant may perform a remote control function for operating the electronic product through an infrared signal generator (not shown).

The controller may control the speaker lamp (mirror lamp) to operate according to the user's voice signal. For example, the controller may turn on/off the power of the speaker lamp (mirror lamp) or variously change the color of the speaker lamp (mirror lamp) according to the user's voice signal.

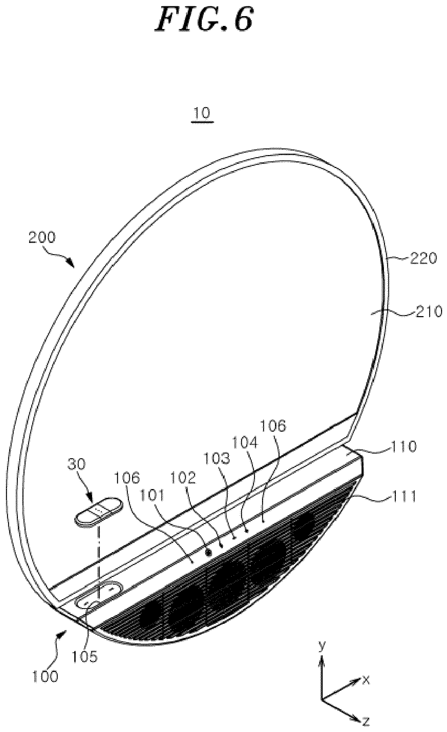

Referring to FIG. 6, a mounting groove 105 in which a portable biometric information measuring sensor unit 150 is detachably attached may be formed in the speaker unit 100. The speaker unit 100 may transmit a preset signal to the portable biometric information sensor unit 150 or may receive a preset signal from the portable biometric information sensor unit 150.

Here, the portable biometric information measuring sensor unit 150 may determine user's biometric information based on at least one biosignal. For example, the portable biometric information measuring sensor unit 150 may determine photoplethysmography, electrocardiogram, heart rate, heart rate variability, and blood pressure, and/or oxygen saturation (e.g., peripheral oxygen saturation) of the user based on the at least one biosignal, e.g., a PPG signal and/or an ECG signal. The portable biometric information measuring sensor unit 150 may provide an operation result thereof to the mirror unit 200.

The portable biometric information measuring sensor unit 150 is usually maintained in a state inserted into the mounting groove 105 of the speaker unit 100, but if the user pushes the portable biometric information measuring sensor unit 150 when necessary, the portable biometric information measuring sensor unit 150 may protrude out of the mounting groove 105 of the speaker unit 100. The portable biometric information measuring sensor unit 150 may measure the user's biometric information to measure blood pressure, electrocardiogram, and the like through PCG and ECG sensors. The measured biometric information may be transmitted to a hospital or the like through a mobile phone and cloud, and may perform remote medical and monitoring functions.

The mirror unit 200 may provide a mirror function to the user. The mirror unit 200 may be detachably installed to the speaker unit 100. For example, the mirror unit 200 may be attached and detached through a separate attachment/detachment unit. The attachment/detachment unit may include a magnetic material capable of detachably attaching the mirror unit 200 to the speaker unit 100 by magnetic force.

The mirror unit 200 may include a mirror 210, a mirror bracket 220, and a mirror lamp. The mirror 210 may be a mirror that can mirror the user. The mirror 210 may be mounted on one surface of a mirror plate.

The mirror bracket 220 may be installed at an edge portion of the mirror 210 to support the mirror 210. The mirror bracket 220 may be fixed to a wall through the wall mount bracket 300. For coupling with the wall mount bracket 300, the mirror bracket 220 may provide at least one mirror fixing hole 221. For example, the mirror bracket 220 may provide two mirror fixing holes 221. The mirror lamp may provide LED lighting. The mirror lamp may be a ring light provided in a ring shape along the edge of the mirror 210.

The smart sound mirror device 10 may provide a sound mirror function having an interior effect in commercial spaces such as a restaurant and the like, as well as various residential spaces such as a bathroom and a living room, and the like. In particular, when the smart sound mirror device 10 is used in a bathroom, the smart sound mirror device 10 may turn on/off lighting in the bathroom, adjust water temperature and on/off of a bidet, adjust temperature and on/off of a shower, adjust temperature and on/off of a bath, or turn on/off a bathroom fan.

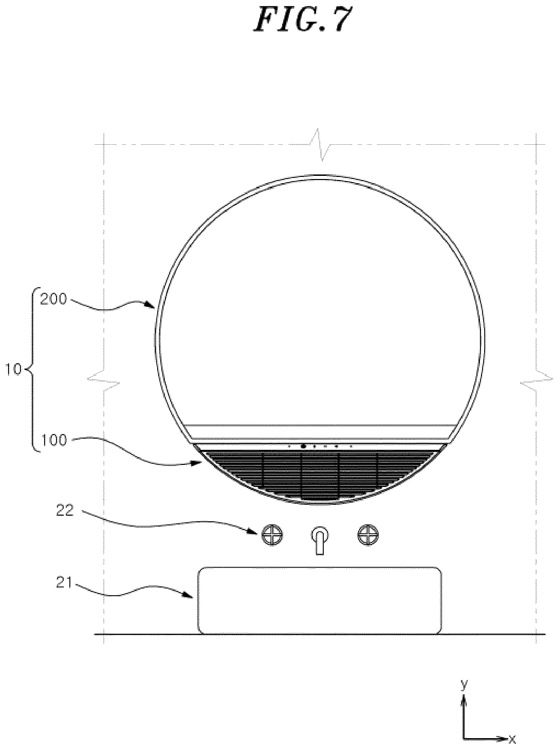

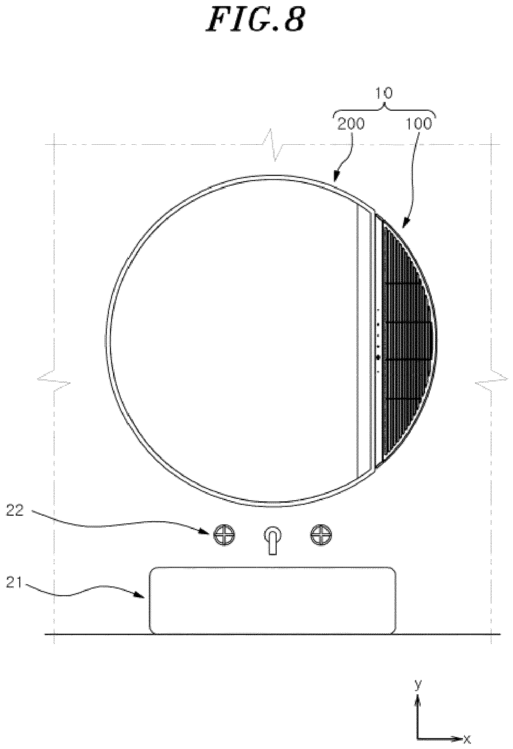

When the smart sound mirror device 10 is used in a bathroom, referring to FIG. 7, the smart sound mirror device 10 may be installed on a wall surface above a water supply device 22 and a washbasin 21 in the bathroom in an upright state. In addition, referring to FIG. 8, the smart sound mirror device 10 may be installed on the wall surface above the water supply device 22 and the washbasin 21 in the bathroom in a state rotated laterally by 90 degrees.

The smart sound mirror device 10 may operate in conjunction with an application provided to a communication terminal such as a smartphone. For example, in the smart sound mirror device 10, through the application provided to the communication terminal, color and brightness of the speaker lamp and the mirror lamp may be adjusted, respectively, and a volume of the speaker may be adjusted.

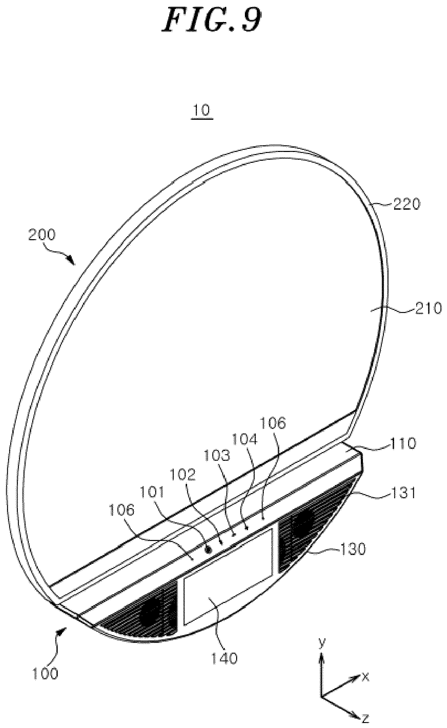

Referring to FIG. 9, a speaker unit 100 according to a second embodiment of the present disclosure may include a speaker body 110, a speaker bracket 120, a speaker cover 130, and a display module 140.

In describing the second embodiment of this disclosure, since there is a difference in that the speaker unit 100 further includes the display module 140 when compared with the above-described embodiment, the description will be made mainly on the difference, and the same description and reference numerals as those in the above-described embodiment are referred to.

The display module 140 may be installed in a front center portion of the speaker body 110. The display module 140 may output an image by executing a preset display mode (application, software, etc.) according to a user's voice signal or touch signal.

In response to the user's voice signal or touch signal, the display module 140 may provide various information according to a preset algorithm, for example, an algorithm that can be implemented in a conventional display module 140, or an algorithm for receiving information from a server. For example, the display module 140 may provide weather information, beauty content information, latest trend information, makeup information, hair and nail related information, and the like. As a matter of course, besides the above, the display module 140 may provide various information requested by the user.

The display module 140 may write and send SNS in voice through the display. In addition, the display module 140 may provide a video call function. Further, the display module 140 may provide shopping information through the display, and may conduct a shopping transaction in response to the user's voice signal.

A motion sensor may be mounted on the display module 140. Accordingly, the user can control UI on the displayed screen without directly touching the display.

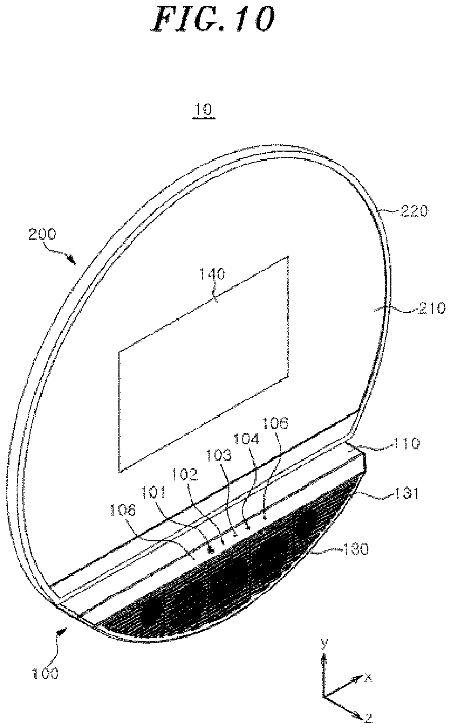

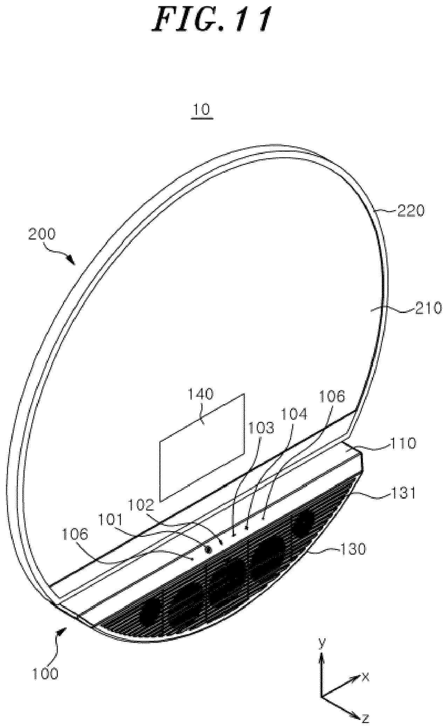

In the present embodiment, the display module 140 is installed in the front center portion of the speaker body 110, and speakers are located on both sides of the display module 140, but the position of the display module 140 may be variously changed without being limited thereto. For example, as shown in FIG. 10, the display module 140 may be installed in a center portion of the mirror 210 or may be installed in a lower portion of the mirror 210 as shown in FIG. 11.

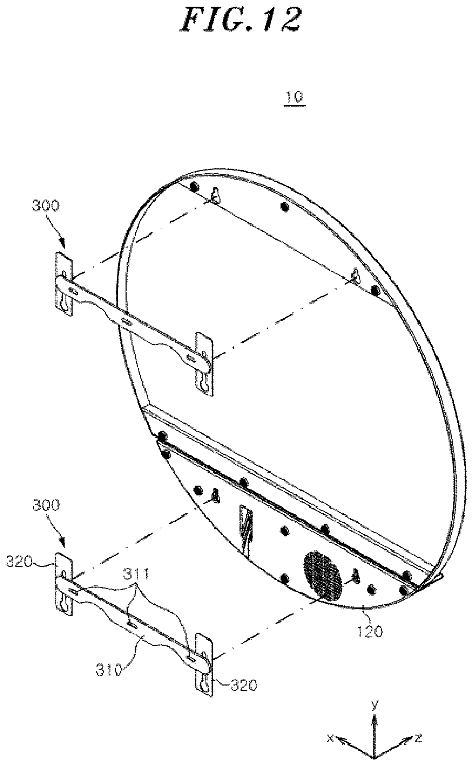

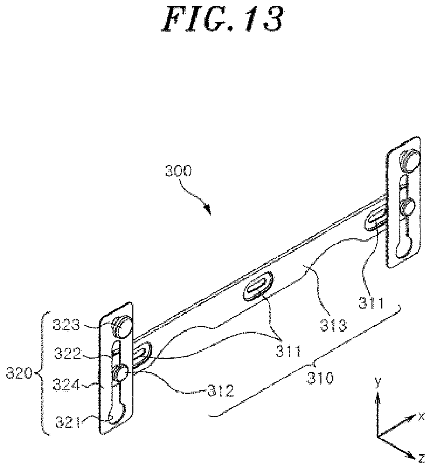

Referring to FIGS. 12 to 14, a wall mount bracket 300 according to a third embodiment of the present disclosure may include a mounting fixed piece 310 and a mounting movable piece 320. The mounting fixed piece 310 may be fixedly installed on a wall. The mounting movable piece 320 may coupled to the mounting fixed piece 310 to be movable in an up-down direction.

The mounting fixed piece 310 may include a fixing hole portion 311, a fixing holder 312, and a fixing body portion 313. The fixing body portion 313 may have a rod shape extending in the width direction of the smart sound mirror device 10. The fixing body portion 313 may be disposed perpendicular to the mounting movable piece 320. A plurality of fixing hole portions 311 may be formed in the fixing body portion 313 to be spaced apart from each other in a longitudinal direction of the fixing body portion 313. The fixing holder 312 may be provided at both ends of the fixing body portion 313.

The fixing hole portion 311 may be formed in a long hole shape extending in the longitudinal direction of the fixing body portion 313. A fixing member may be inserted into the fixing hole portion 311. The fixing member is fixed to a wall surface while passing through the fixing hole portion 311, so that the mounting fixed piece 310 may be fixed to the wall surface.

The fixing holder 312 may be a bolt formed to protrude rearward at both ends of the fixing body portion 313. The fixing holder 312 may include a head having a diameter smaller than a width of a moving hole portion 321 and larger than a width of a moving slit portion 322, and a screw portion having a diameter smaller than the diameter of the head and thread-coupled to both ends of the fixing body portion 313.

When the mounting movable piece 320 is coupled to the mounting fixed piece 310, in a state in which the fixing holder 312 of the mounting fixed piece 310 is inserted into the moving hole portion 321 of the mounting movable piece 320, the moving slit portion 322 of the mounting movable piece 320 can be moved in the up-down direction, and at a position where the smart sound mirror device 10 is expected to be fixed to the wall in an upright state, the fixing holder 312 may firmly fix the mounting movable piece 320 to the mounting fixed piece 310 through the rotation of the fixing holder 312.

In addition, the fixing holder 312 may include a holder head 312a and a holder pillar 312b connected to the holder head 312a. The holder head 312a and the holder pillar 312b may be wrapped with a rubber member. The fixing holder 312 wrapped with the rubber member may provide a frictional force capable of temporarily fixing the relative positions of the mounting fixed piece 310 and the mounting movable piece 320.

A diameter of the holder pillar 312b wrapped with the rubber member may be larger than the width of the moving slit portion 322 of the mounting movable piece 320. Accordingly, the user can move the mirror unit 200 while mounting the mirror unit 200 on the mounting bracket 300 in a state in which the mounting fixed piece 310 and the mounting movable piece 320 are temporarily fixed. After adjusting the position and posture of the mirror unit 200, the user can separate the mirror unit 200 from the mounting bracket 300 and completely fix the mounting fixed piece 310 and the mounting movable piece 320 in the temporarily fixed state.

The mounting movable piece 320 is mounted to the mounting fixed piece 310 to be movable in the up-down direction, so that the height of the wall mount bracket 300 can be adjusted. The mounting movable piece 320 may include a moving hole portion 321, a moving slit portion 322, a moving holder 323, and a moving body portion 324. The moving body portion 324 may have a rod shape extending in the up-down direction of the smart sound mirror device 10. The moving body portion 324 may be disposed perpendicular to the mounting fixed piece 310. The moving slit portion 322 may be formed in the moving body portion 324 to extend in a longitudinal direction of the moving body portion 324, and the moving hole portion 321 and the moving holder 323 may be formed at both ends of the moving body portion 324, respectively.

The moving hole portion 321 may have a diameter greater than the diameter of the fixing holder 312 of the mounting fixed piece 310. When the mounting movable piece 320 is coupled to the mounting fixed piece 310, the fixing holder 312 of the mounting fixed piece 310 may be inserted into the moving hole portion 321.

The moving slit portion 322 may have a guide hole shape extending along the longitudinal direction of the moving body portion 324. When the mounting movable piece 320 is coupled to the mounting fixed piece 310, the fixing holder 312 of the mounting fixed piece 310 inserted into the moving hole portion 321 may move in the up-down direction along the moving slit portion 322, can be moved. When the fixing holder 312 moves in the up-down direction along the moving slit portion 322, the coupling height of the speaker unit 100 or the mirror unit 200 with respect to the wall mount bracket 300 can be adjusted.

The moving holder 323 may have a bolt shape protruding at one end of the moving body portion 324. When the speaker unit 100 or the mirror unit 200 is coupled to the wall mount bracket 300, the moving holder 323 may be inserted and fixed into the bracket fixing hole 121 of the speaker unit 100 or may be inserted and fixed in the mirror fixing hole 221 of the mirror unit 200.

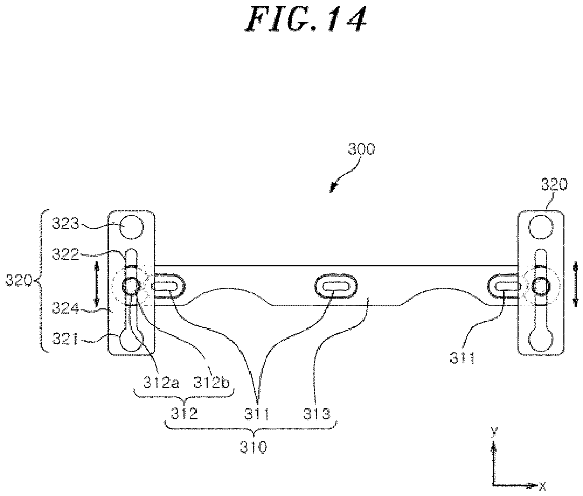

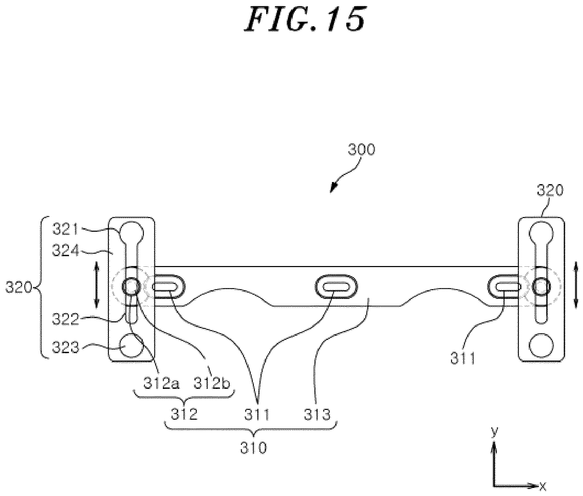

Referring to FIG. 15, according to a modified example of the third embodiment of the present disclosure, the mounting movable piece 320 of the wall mount bracket 300 may be mounted to the mounting fixed piece 310 in an upside-down state compared to the mounting movable piece 320 of FIG. 14. In this case, the distance from the center of the moving holder 323 to the top of the moving body portion 324 may be the same as the distance from the end of the bracket fixing hole 121 to the mirror 210.

As described above, according to one embodiment of the present disclosure, as the mirror and the speaker can be combined, the user can enjoy the sound of the speaker simultaneously while looking in the mirror. In addition, the user can use the mirror and the speaker separately, install the speaker on the wall on the right or left side of the mirror through the bracket freely, use only the speaker alone, and use the speaker by adding the display thereto. Further, the AI assistant platform service is equipped to provide the function of an AI speaker, and two or more microphones are mounted on the speaker to recognize and control the voice. In addition, by applying software that can be used in conjunction with smart homes and the Internet of Things (IoT), various uses in conjunction with peripheral devices are possible. Furthermore, by providing lamps at the rear portion of the mirror and at the upper portion of the speaker in contact with the mirror, a mood lighting function can be provided, and the smart sound mirror device can be installed in various residential spaces such as a bathroom, a living room and the like, and commercial spaces such as a restaurant and the like, so that a sound mirror function with an interior effect can be provided.

While the present disclosure has been described above using the preferred embodiments, the scope of the present disclosure is not limited to the specific embodiments described above, and should be construed as defined in the appended claims. A person having ordinary knowledge in the relevant technical field will be able to replace or modify the constituent elements. Further, it will be understood by those skilled in the art that various changes and modifications can be made without departing from original characteristics of the present disclosure.

## Claims

1. A smart sound mirror device comprising:
a speaker unit configured to output a sound;
a mirror unit detachably installed to the speaker unit; and
a wall mount bracket configured to be fixedly installed on a wall, the wall mount bracket being selectively fixed to the speaker unit or the mirror unit.

2. The smart sound mirror device of claim 1, wherein the speaker unit includes:
a speaker body;
a speaker built in the speaker body;
a speaker bracket mounted on a rear portion of the speaker body to be fixed to the wall mount bracket; and
a speaker cover mounted on a front portion of the speaker body and providing a sound slit through which a sound of the speaker is output.

3. The smart sound mirror device of claim 2, wherein the speaker body includes:
a rear support frame supporting a rear portion of the speaker;
a front support frame mounted to a front end portion of the rear support frame to support a front portion of the speaker;
a waterproof member for providing watertightness to the speaker body; and
a waterproof support frame disposed between the front support frame and the waterproof member to support the waterproof member.

4. The smart sound mirror device of one of claims 1 to 3, wherein the wall mount bracket includes:
a mounting fixed piece configured to be fixedly installed on the wall; and
a mounting movable piece mounted to the mounting fixed piece to be movable in an up-down direction, the mounting movable piece being selectively fixed to the speaker unit or the mirror unit.

5. The smart sound mirror device of claim 4, wherein the mounting fixed piece includes:
a fixing body portion;
a plurality of fixing hole portions extending in a longitudinal direction of the fixing body portion and spaced apart from each other in the longitudinal direction of the fixing body portion; and
a fixing holder formed to protrude from a rear surface of the fixing body portion.

6. The smart sound mirror device of claim 5, wherein the mounting movable piece includes:
a moving body portion;
a moving hole portion formed in one end portion of the moving body portion and having a larger diameter than a diameter of the fixing holder;
a moving slit portion extending from the moving hole portion in a longitudinal direction of the moving body portion; and
a moving holder formed to protrude at the other end portion of the moving body portion to be mountable to the speaker unit or the mirror unit.

7. The smart sound mirror device of one of claims 1 to 6, wherein the mirror unit include:
a mirror; and
a mirror bracket installed on an edge portion of the mirror to support the mirror and providing a mirror hole for fixing with the wall mount bracket.

8. The smart sound mirror device of one of claims 1 to 7, wherein the speaker unit further includes:
an attachment/detachment unit configured to selectively attach or detach the mirror unit by magnetic force of a magnetic material.

9. The smart sound mirror device of one of claims 1 to 8, further comprising:
a portable biometric information measuring sensor unit that determines biometric information of a user based on at least one biometric signal,
wherein the portable biometric information measuring sensor unit is detachably mounted to an upper portion of the speaker unit, and when mounted on the speaker unit, the portable biometric information measuring sensor unit provides an operation result thereof to the mirror unit.

10. The smart sound mirror device of one of claims 1 to 9, further comprising:
a display module installed in the speaker unit or the mirror unit,
wherein the display module outputs an image by executing a preset display mode according to a voice signal or touch signal of a user.
